(19) Europäisches Patentamt

European Patent Office

Office européen des brevets

(11) Veröffentlichungsnummer: **0 248 373**
**B1**

(12) **EUROPÄISCHE PATENTSCHRIFT**

(45) Veröffentlichungstag der Patentschrift: **18.07.90**

(21) Anmeldenummer: **87107871.3**

(22) Anmeldetag: **30.05.87**

(51) Int. Cl.⁵: **B 60 N 2/02,** B 60 N 2/34,
A 47 C 17/16

(54) **Reisefahrzeug.**

(30) Priorität: **04.06.86 DE 3618826**

(43) Veröffentlichungstag der Anmeldung:
**09.12.87 Patentblatt 87/50**

(45) Bekanntmachung des Hinweises auf die
Patenterteilung:
**18.07.90 Patentblatt 90/29**

(84) Benannte Vertragsstaaten:
**BE CH FR GB LI NL SE**

(56) Entgegenhaltungen:
**CH-A- 425 118**
**FR-A-1 450 283**
**FR-A-2 399 927**
**GB-A- 657 945**
**GB-A-1 508 792**
**GB-A-2 011 252**
**US-A-3 695 698**
**US-A-3 797 887**
**US-A-4 085 962**

(73) Patentinhaber: **Welter, Manfred**
**Max-Planck-Strasse 10**
**D-4172 Straelen (DE)**

(72) Erfinder: **Welter, Manfred**
**Max-Planck-Strasse 10**
**D-4172 Straelen (DE)**

(74) Vertreter: **Funken, Josef, Dipl.-Ing.**
**Hochstrasse 3e**
**D-4133 Neukirchen-Vluyn (DE)**

Courier Press, Leamington Spa, England.

## Beschreibung

Die Erfindung betrifft ein Reisefahrzeug, insbesondere Reiseomnibus mit einem Mittelgang durch den Fahrgastraum und mit zu beiden Seiten des Mittelganges vorgesehenen Doppelsitzen, die aus einer Sitzposition in eine Ruhebzw. Liegeposition und umgekehrt zu bringen sind.

Bei einem bekannten Reiseomnibus sind die alle in Fahrtrichtung des Reiseomnibusses orientierten Sitze aus einer Sitzposition in eine Ruhebzw. Liegposition zu bringen, indem die Rückenlehnen aus der normal geneigten Stellung in eine stark geneigte Lage zu bringen sind. Hierbei liegt der Fahrgast weiter nach hinten und kann in dieser Sitzhaltung ruhen bzw. schlafen. Der Fahrgast kann dabei allerdings nur auf dem Rücken liegen. Es ist nicht möglich, sich auf die Seite zu legen, um eine andere Körperhaltung einzunehmen.

Der Erfindung liegt die Aufgabe zugrunde, ein Reisefahrzeug der einleitend genannten Art zu schaffen, dessen Sitze aus einer Sitzposition in eine Liegeposition derart zu bringen sind, daß der Fahrgast sowohl normal sitzen, als auch auf einer im wesentlichen ebenen Auflage liegen bzw. in unterschiedlicher Körperhaltung schlafen kann.

Diese Aufgabe wird erfindungsgemäß dadurch gelöst,

a) daß der Fahrgastraum zu beiden Seiten des Mittelganges durch Querwände in mehrere Abteile mit je zwei einander gegenüber angeordneten Doppelsitzen unterteilt ist,

b) daß die Sitzbank in der Sitzposition oben zwei nebeneinander angeordnete Sitzpolster und unten eine elastisch nachgiebige Liegeauflage hat sowie um eine am vorderen Ende der Sitzbank vorgesehene quer zur Fahrzeuglängsrichtung verlaufende Schwenkachse um etwa 180° nach vorn umzulegen ist,

c) daß die Rückenlehne in der Sitzposition vorn zwei nebeneinander angeordnete Rückenpolster und hinten eine elastisch nachgiebige Liegeauflage hat sowie um eine am oberen Ende der Rückenlehne vorgesehene quer zur Fahrzeuglängsrichtung verlaufende Achse in eine horizontale Position hochschwenkbar und in dieser Position um 180° um eine in Fahrzeuglängsrichtung verlaufende Achse wendbar und in dieser Position fixierbar ist und

d) daß zwischen dem Sitz und der Querwand ein nachgiebiges Liegeteil vorgesehen ist, das in eine mit der Liegeauflage der Sitzbank fluchtende Position zu bringen ist.

Auf diese Weise gelangt man zu einem Reisefahrzeug, in dem der Fahrgast normal sitzen und wie in einem Bett liegen kann. In der Sitzposition der Sitze sitzt der Fahrgast auf dem Sitzpolster und lehnt den Rücken gegen die Rückenlehne, wobei das Sitzpolster und die Rückenlehne in üblicher Weise den Körperkonturen des Fahrgastes entsprechend gemuldet sind, so daß insbesondere der Rücken überall eine Unterstützung findet und nicht ermüdet.

Nach einem weiteren Merkmal der Erfindung ist vorgesehen, daß die Schwenkachse der Sitzbank zwischen dem Sitzpolster und der Liegeauflage vom Mittelgang bis zur Seitenwand des Fahrzeuges durchgehend angeordnet ist. Hierdurch ist es möglich, die Sitzbank aus der Sitzposition, in der das Sitzpolster sich oben und die Liegeauflage sich unten befinden, in die Liegeposition zu schwenken, in der die Liegeauflage sich oben und das Sitzpolster sich unten befinden. Das bedeutet, da8 sich nunmehr oben eine ebene Liegeauflage befindet.

Zweckmäßig ist in der Mitte des Abteils zwischen den gegenüberliegend angeordneten Doppelsitzen eine Konsole zum Abstützen der umgeklappten Sitzbank vorgesehen. Somit ist die umgeklappte Sitzbank auf der Schwenkachse und der Konsole gelagert.

Zweckmäßig ist auf der Konsole in der Sitzposition der Sitze ein Tisch angeordnet. — Es ist somit für den Tisch kein gesonderter Fuß erforderlich.

In weiterer Ausgestaltung der Erfindung kann die Anordnung so getroffen sein, daß die schräggestellte Rückenlehne an ihrem oberen Ende auf einer quer zur Fahrzeuglängsrichtung angeordneten Schwenkachse schwenkbar gelagert ist. — Hierdurch ist es möglich, die Rückenlehne in eine horizontale Position zu bringen.

Zweckmäßigerweise ist hierbei die Anordnung so getroffen, daß senkrecht zu der Schwenkachse eine in Längsrichtung der Rückenlehne angeordnete Wendeachse vorgesehen ist um die die Rückenlehne um 180° zu wenden ist. Hierdurch ergibt sich der Vorteil, daß durch Wenden der Rückenlehne um 180° die gemuldeten Rückenpolster sich unten und die im wesentlichen ebene Liegeauflage sich oben befinden. Das führt gleichzeitig dazu, daß der Fahrgast eine ebene Schlaffläche vorfindet, auf er er in allen beliebigen Körperpositionen liegen kann, ohne gezwungen zu sein, eine ganz bestimmte Körperlage einzunehmen.

In weiterer Ausgestaltung der Erfindung empfiehlt es sich, daß am unteren Ende des Liegeteiles eine quer zur Fahrzeuglängsrichtung angeordnete Schwenkachse vorgesehen ist, um die das Liegeteil schwenkbeweglich gelagert ist. — Hierdurch läßt sich ohne weiteres der Raum zwischen der umgeklappten Sitzbank und der Querwand so ausfüllen, daß hierdurch eine durchgehende ebene Liegefläche entsteht.

Des weiteren empfiehlt es sich, daß an der Innenseite des Abteils eine Armlehne vorgesehen ist, die um eine vordere Achse zum Abstützen der sich in der horizontalen Position befindlichen Rückenlehne hochschwenkbar ist. Zweckmäßigerweise ist die Anordnung außerdem so getroffen, daß an der Fensterseite eine an der Außenwand gelagerte Strebe vorgesehen ist, die zum Unterstützen der in die horizontale Position hochgeschwenkten Rückenlehne um eine vordere Achse hochschwenkbar ist. — Durch diese beiden Maßnahmen besteht die Möglichkeit, die in die horizontale Position hochgeschwenkte Rückenlehne an beiden mittleren Enden zu unterstützen, so daß die Rückenlehne auf drei Punkten statisch stabil gelagert ist, nämlich auf den beiden Unterstützungspunkten durch die Armlehne und durch die Strebe sowie auf der Lagerung der Querwand.

Des weiteren können am Dach des Fahrzeuges Sicherheitsgurte vorgesehen sein, die an der hochgeschwenkten Rückenlehne zu befestigen sind. — Das führt zu einer zusätzlichen Sicherheit auch gegen Herausfallen des Fahrgastes von der hochgeschwenkten Rückenlehne.

Zweckmäßig können die Sitzpolster und die Rückenlehnen den Körperkonturen der Fahrgäste entsprechend gemuldet sein.

Hierbei empfiehlt es sich, daß die Liegeauflagen der Sitzbank, der Rückenlehne und des Liegeteiles als Matratze ausgebildet sind.

Vorteilhafterweise kann hierbei die Liegeauflagen aus einem elastisch nachgiebigen Schaumstoff bestehen. Die auf diese Weise gebildete Liegefläche stellt eine ebene elastisch nachgiebige Fläche dar, wie man sie in einem guten Bett vorfindet, so daß der Fahrgast oben auf der hochgeschwenkten Rückenlehne ebenso wie unten auf der umgeklappten Sitzbank und dem umgeschwenkten Liegeteil völlig entspannt liegen kann und auch nach längeren Fahrten ausgeruht am Ziel ankommt.

Die Erfindung wird nachfolgend anhand eines in der Zeichnung dargestellten Ausführungsbeispieles des näheren erläutert. Es zeigt

Fig. 1 eine Seitenansicht auf einen Reiseomnibus mit den erfindungsgemäßen Merkmalen,

Fig. 2 einen Mittellängsschnitt durch den Reiseomnibus gemäß Fig. 1 über einen Bereich von 2 benachbarten Abteils,

Fig. 3 eine Draufsicht auf Fig. 2,

Fig. 4 einen Querschnitt durch den Reiseomnibus gemäß Fig. 1,

Fig. 5 eine Darstellung der Stahlkonstruktion zu beiden Seiten einer Querwand,

Fig. 6 eine Ansicht auf Fig. 5 in Richtung des Pfeiles VI,

Fig. 7 eine Ansicht auf Fig. 5 in Richtung des pfeiles VII,

Fig. 8 einen Schnitt längs der Linie VIII—VIII der Fig. 5 und

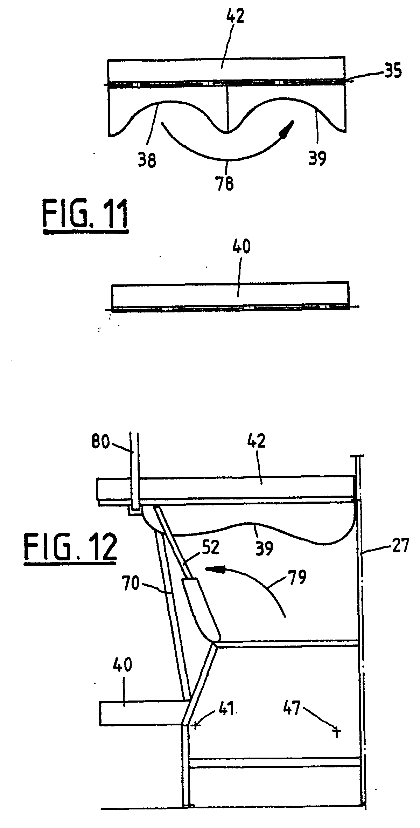

Die Figuren 9 bis 12 die Darstellung der zeitlichen Abfolge der Änderungsschritte von der Sitzposition in die Liegeposition.

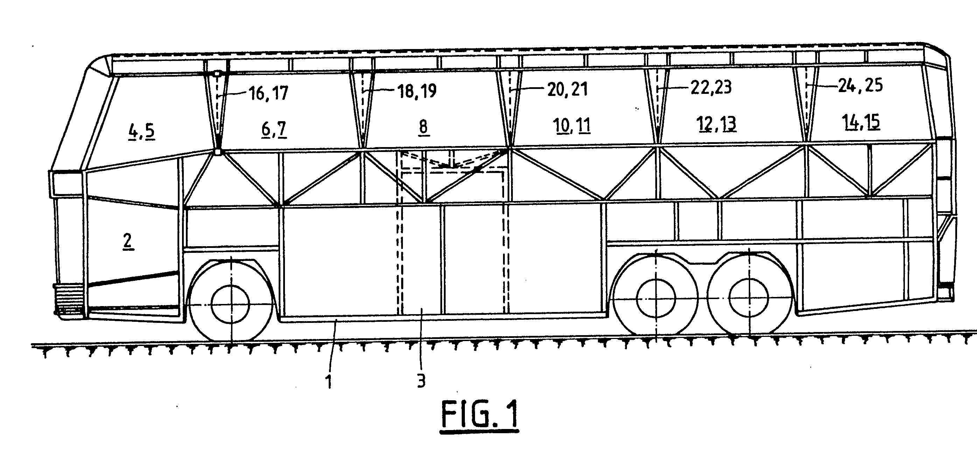

Figur 1 zeigt eine Gesamtdarstellung eines erfindungsgemäß ausgebildeten Omnibusses 1 mit dem Fahrerraum 2 und dem Eingang 3. Der Fahrgastraum ist unterteilt in gegenüberliegende Abteile 4, 5 und 6, 7 sowie das Einzelabteil 8 und weitere gegenüberliegende Abteile 10, 11 und 12, 13 sowie 14, 15. Die diesen Abteilen zugeordneten Fenster sind durch die Holme 16, 17; 18, 19; 20, 21; 22, 23 und 24, 25 voneinander getrennt. Im Bereich dieser Holme befinden sich auch die später noch zu beschreibenden Querwände.

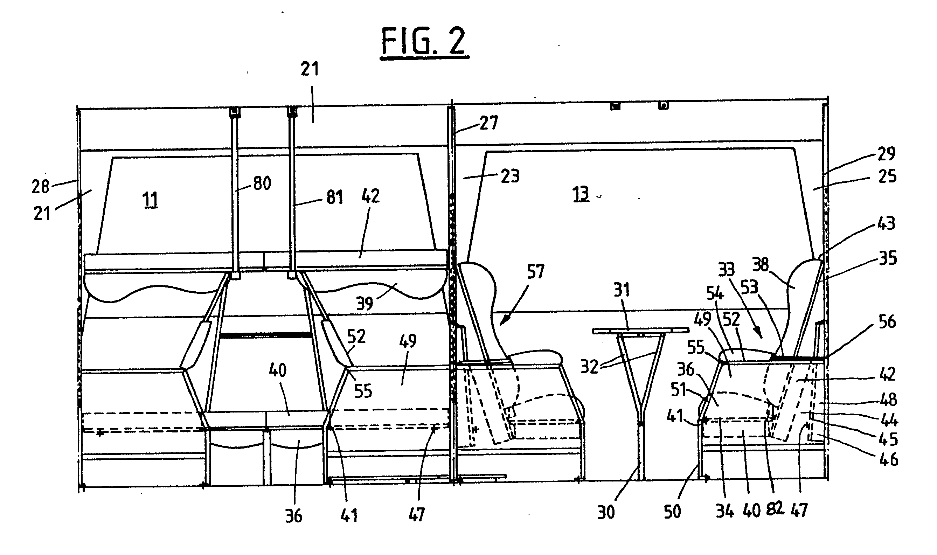

Figur 2 zeigt eine Ansicht auf die Abteile 11 und 13 vom Mittelgang 26 her. Die Abteile 11 und 13 sind durch eine Querwand 27 voneinander trennt. Durch weitere Querwände 28 und 29 sind die Abteile 11 und 13 von den ihnen benachbarten Abteilen getrennt.

In Abteil 13 ist die Sitzposition der Sitze und in Abteil 11 deren Liegeposition dargestellt. In der Mitte des Abteils 13 befindet sich auf einer Konsole 30 ein Tisch 31 mit Füßen 32.

Auf der rechten Seite des in Figur 2 dargestellten Abteils 13 ist ein durchgehender Doppelsitz 33 vorgesehen, der aus einer durchgehenden Sitzbank 34 und aus einer ebenfalls durchgehenden Rückenlehne 35 besteht. In der Sitzbank 34 sind zwei Sitzpolster 36, 37 nebeneinander und in der Rückenlehne zwei Rückenpolster 38, 39 ebenfalls nebeneinander vorgesehen.

Unter den Sitzpolstern 36, 37 der Sitzbank 34 ist eine durchgehende Liegeauflage 40 vorgesehen. Am vorderen Ende der Sitzbank 34 ist eine Schwenkachse 41 vorgesehen, die sich über die gesamte Breite der Sitzbank 34 erstreckt. Um diese Schwenkachse 41 ist die Sitzbank 34 aus der in Figur 2 in Abteil 13 rechts dargestellten Sitzposition in die in Abteil 11 dargestellte Liegeposition zu schwenken.

Die Rückenlehne 35 hat auf der Vorderseite zwei nebeneinander angeordnete Rückenpolster 38, 39 und auf der Rückseite ein durchgehendes Liegeteil 42. Außerdem ist die Rückenlehne 35 um eine an ihrem oberen Ende 43 angebrachte und in Figur 2 im einzelnen nicht näher dargestellte horizontal und quer zur Fahrzeuglängsrichtung verlaufende Achse in eine horizontale Position hochschwenkbar und in dieser Position um 180° um eine in Figur 2 ebenfalls im einzelnen nicht näher dargestellte in Fahrzeuglängsrichtung verlaufende Achse wendbar und in dieser Position fixierbar.

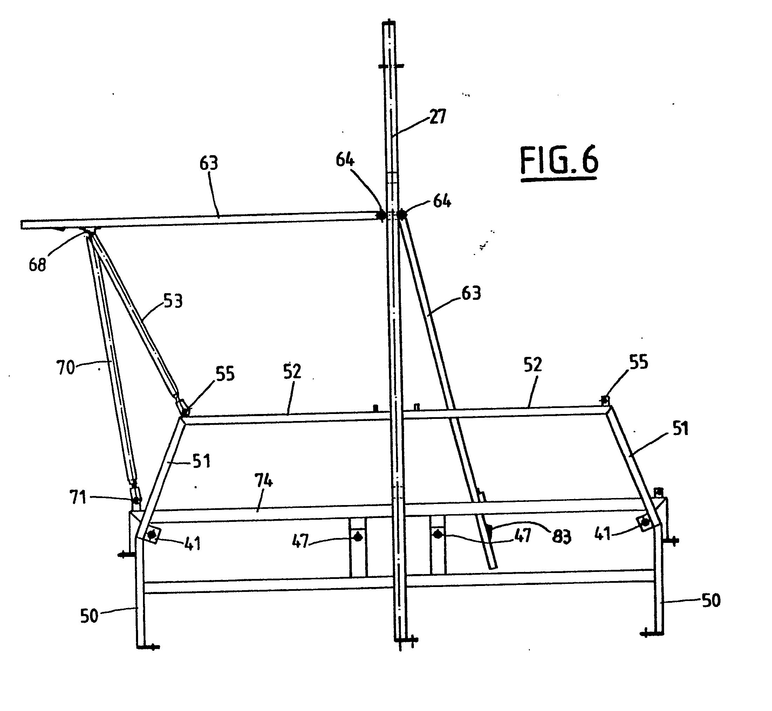

An beiden Seiten der Sitzbank 34 ist, wie in Figur 2 dargestellt, je eine Halterung 82 vorgesehen, die im dargestellten Ausführungsbeispiel als Öse ausgebildet ist. Die Öse kann viereckig oder rund ausgebildet sein. Außerdem ist, wie insbesondere aus Figur 6 ersichtlich ist, am Rahmen 63 der Rückenlehne 35 an beiden Seiten je ein Haltestift 83 angebracht, der als Haken ausgebildet sein kann. In Abhängigkeit von der Formgebung der Öse 82 kann der Haken 83 viereckig oder rund ausgebildet sein. In der in Figur 2 bzw. in Figur 6 dargestellten Sitzstellung greifen die Haltestifte 83 bzw. die Haken so in die Halterungen 82 bzw. in die Ösen ein, daß eine stabile und unverschiebliche Verbindung der Sitzbank und der Rückenlehne vorliegt, diese Verbindung jedoch ohne weiteres zum Zwecke des ümbaues lösbar ist.

In dem Raum 44 zwischen der Rückenlehne 35 und der dahinter befindlichen Querwand 29 ist ein Liegeteil 45 angeordnet, das an seinem unteren Ende 46 um eine Schwenkachse 47 um etwa 90° nach vorn hin schwenkbar ist, so daß die Liegeauflage 48 des Liegeteiles 45 mit der Liegeauflage 40 der Sitzbank 34 fluchtet.

Auf der Trennwand 49 des Sitzpolsters 36 zum Gang 26 hin sind auf einem senkrechten Bein 50 eine schräg verlaufende Stange 51 und daran anschließend eine waagrecht verlaufende Stange 52 vorgesehen. Auf der Stange 52 ist eine Armlehne 53 mit einem Armpolster 54 so angeordnet, daß sie am vorderen Ende 55 der Stange 52 nach oben schwenkbar gelagert ist, während sie am gegenüberliegenden Ende 56 lösbar festgelegt ist.

In Abteil 13 ist dem Doppelsitz 33 gegenüber ein Doppelsitz 57 in umgekehrter Orientierung vorgesehen, der im übrigen die gleichen Merkmale aufweist wie der vorstehend beschriebene Doppelsitz 33.

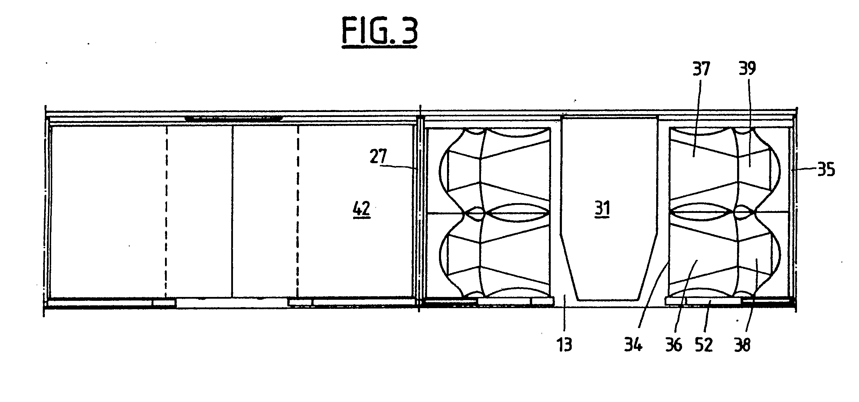

Auf der linken Hälfte der Figuren 2 und 3 sind die Doppelsitze 33 und 57 in der Liegeposition dargestellt.

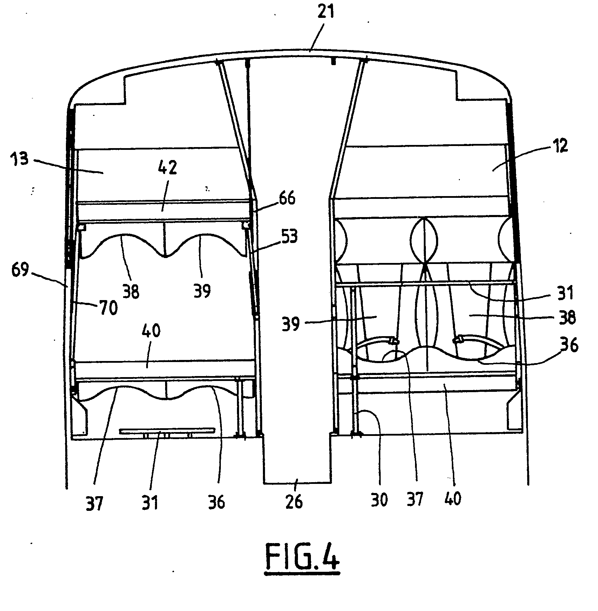

Figur 4 zeigt einen Querschnitt durch den Omnibus, wobei in dem in Figur 4 rechts dargestellten Abteil 13 die Sitze 33 sich in der Sitzposition befinden, während sich die Sitze in dem links in Figur 4 dargestellten Abteil 12 in der Liegeposition befinden.

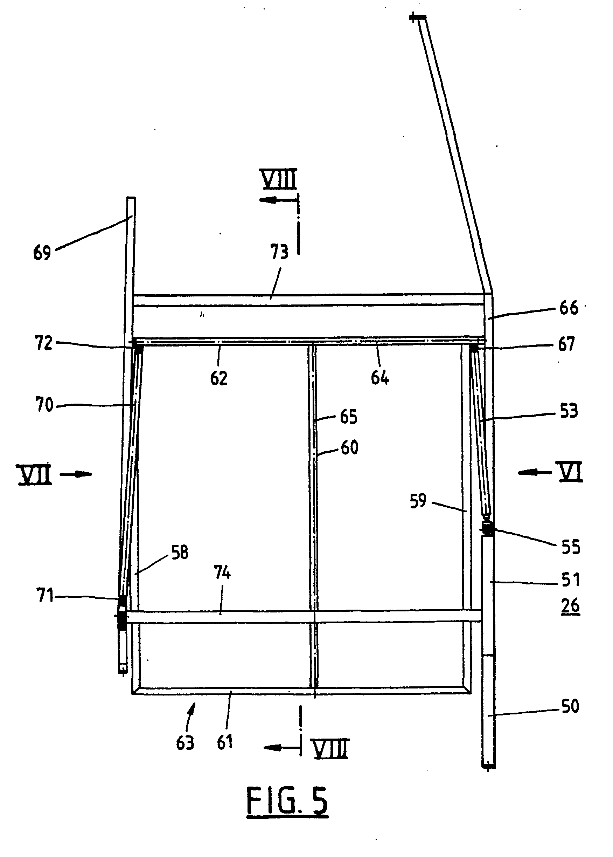

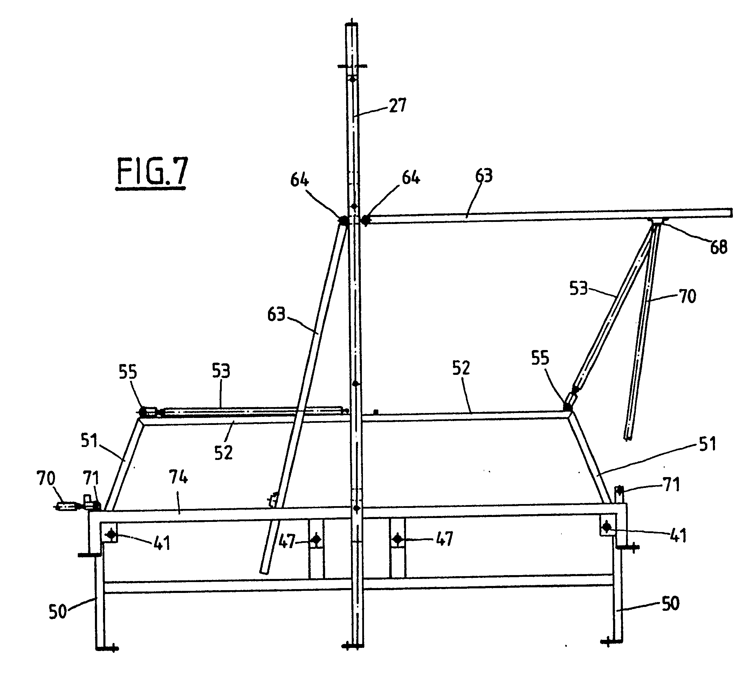

In den Figuren 5 bis 8 ist die Stahlkonstruktion für die Sitze dargestellt. An einem aus drei Längsstangen 58, 59, 60 und zwei Querstangen 61, 62 bestehenden Rahmen 63 ist die Rückenlehne 35 befestigt. Der Rahmen 63 ist um die Schwenkachse 64 aus der in Figur 6 rechts bzw. in Figur 7 links dargestellten Sitzposition in die in Figur 6 links bzw. in Figur 7 rechts dargestellte Liegeposition hochschwenkbar.

In der hochgeschwenkten horizontalen Position ist der Rahmen 63 um die Achse 65 um 180° wendbar.

An der Gangwand 66 ist in dem Gelenk 55 die Armlehne 53 hochgeschwenkt und unterstützt den Rahmen 63 im Unterstützungspunkt 67. Außerdem ist in der Nähe der Außenwand bzw. Fensterwand 69 eine weitere Strebe 70 vorgesehen, die in einem Gelenk 71 gelenkig gelagert ist und den Rahmen 63 im Unterstützungspunkt 72 untergreift. Darüberhinaus sind Verstärkungsstreben 73 und 74 vorgesehen. An einem in Fahrzeuglängsrichtung verlaufenden Stab 74 sind die Schwenkgelenke 71 für die Sitzbank und die Schwenkgelenke 47 für das Liegeteil 45 vorgesehen.

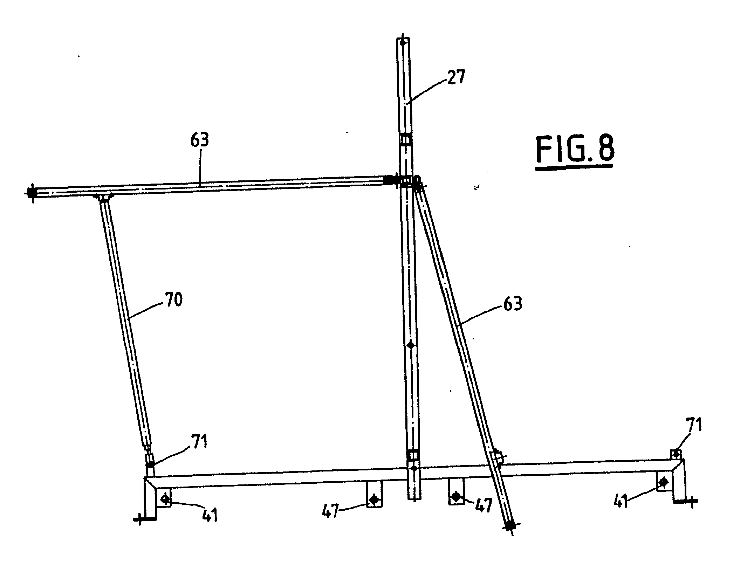

In der rechten Hälfte der Figuren 6 und 8 sowie in der linken Hälfte der Figur 7 nimmt das Gestänge die Sitzposition ein, während in der linken Hälfte der Figuren 6 und 8 sowie in der rechten Hälfte der Figur 7 die Liegeposition dargestellt ist.

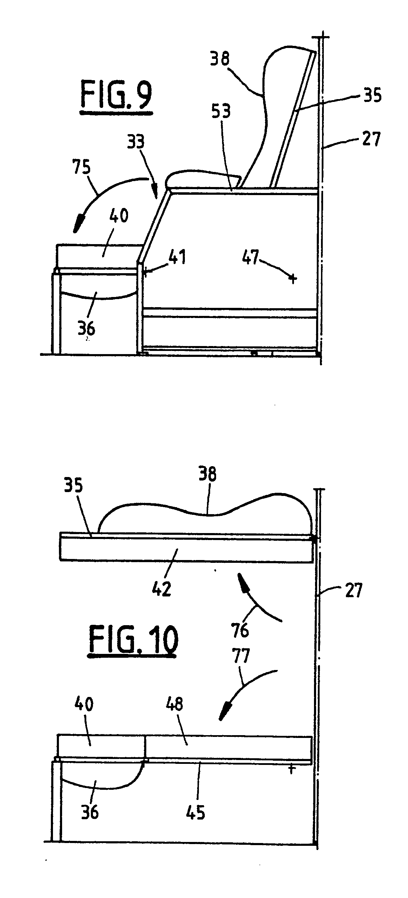

Beim Umbau der Sitze von der Sitzposition in die Liegeposition wird zunächst die Sitzbank 34 gemäß Figur 9 um die Achse 41 in Richtung des Pfeiles 75 in die in Figur 9 dargestellte Lage geschwenkt, in der sich die Sitzpolster 36, 37 unten und die Liegeauflage 40 oben befindet. Anschließend wird die Rückenlehne 35 in Richtung des Pfeiles 76 um die Schwenkachse 64 in die horizontale Position geschwenkt, so daß die Rückenpolster 38, 39 sich oben und die Liegeauflage 42 sich unten befinden. Anschließend wird in Richtung des Pfeiles 77 das Liegeteil 45 um die Schwenkachse 47 geschwenkt, so daß die Liegeauflage 48 mit der Liegeauflage 40 der Sitzbank 34 fluchtet. Anschließend, wird in Richtung des Pfeiles 78 die Rückenlehne 35 um 180° gewendet, so daß nach der Wendung die Liegeauflage 42 oben und die Rückenpolster 38, 39 sich unten befinden. Schließlich werden noch die Armlehne 53 und die Strebe 70 in Richtung des Pfeiles 79 zum Unterstützen der Rückenlehne 35 nach oben geschwenkt. Als zusätzliche Sicherheit werden noch Sicherheitsgurte 80 und 81, die am Dach 21 des Omnibusses befestigt sind, mit der Rückenlehne 35 verbunden.

**Patentansprüche**

1. Reisefahrzeug, insbesondere Reiseomnibus mit einem Mittelgang durch den Fahrgastraum und mit zu beiden Seiten des Mittelganges vorgesehenen Doppelsitzen, die aus einer Sitzposition in eine Ruhe- bzw. Liegeposition und umgekehrt zu bringen sind, dadurch gekennzeichnet,

a) daß der Fahrgastraum zu beiden Seiten des Mittelganges (26) durch Querwände (27, 28, 29) in mehrere Abteile (4 bis 15) mit je zwei einander gegenüber angeordneten Doppelsitzen (33, 53) unterteilt ist,

b) daß die Sitzbank (34) in der Sitzposition oben zweinebeneinander angeordnete Sitzpolster (36, 37) und unten eine elastisch nachgiebige Liegeauflage (40) hat sowie um eine am vorderen Ende der Sitzbank (34) vorgesehene quer zur Fahrzeuglängsrichtung verlaufende Schwenkachse (41) um etwa 180° nach vorn umzulegen ist,

c) daß die Rückenlehne (35) in der Sitzposition vorn zwei nebeneinander angeordnete Rückenpolster (38, 39) und hinten eine elastisch nachgiebige Liegeauflage (42) hat sowie um eine am oberen Ende der Rückenlehne (35) vorgesehene quer zur Fahrzeuglängsrichtung verlaufende Achse (64) in eine horizontale Position hochschwenkbar und in dieser Position um 180° um eine in Fahrzeuglängsrichtung verlaufende Achse (65) wendbar und in dieser Position fixierbar ist und

d) daß zwischen dem Sitz (33) und der Querwand (27) ein nachgiebiges Liegeteil (45) vorgesehen ist, das in eine mit der Liegeauflage (40) der Sitzbank (34) fluchtende Position zu bringen ist.

2. Reisefahrzeug nach Anspruch 1, dadurch gekennzeichnet, daß die Schwenkachse (41) der Sitzbank (34) zwischen dem Sitzpolster (36, 37) und der Liegeauflage (40) vom Mittelgang (26) bis zur Seitenwand (69) des Fahrzeuges durchgehend angeordnet ist.

3. Reisefahrzeug nach Anspruch 1 oder 2, dadurch gekennzeichnet, daß in der Mitte des Abteils zwischen den gegenüberliegend angeordneten Doppelsitzen (33, 53) eine Konsole (30) zum Abstützen der umgeklappten Sitzbank (34) vorgesehen ist.

4. Reisefahrzeug nach einem oder mehreren der vorhergehenden Ansprüche, dadurch gekennzeichnet, daß auf der Konsole (30) in der Sitzposition der Sitze (34) ein Tisch (31) angeordnet ist.

5. Reisefahrzeug nach einem oder mehreren der vorhergehenden Ansprüche, dadurch gekennzeichnet, daß die schräggestellte Rückenlehne (35) an ihrem oberen Ende auf einer quer zur Fahrzeuglängsrichtung angeordneten Schwenkachse (64) schwenkbar gelagert ist.

6. Reisefahrzeug nach einem oder mehreren der vorhergehenden Ansprüche, dadurch gekennzeichnet, daß senkrecht zu der Schwenkachse (64) eine in Längsrichtung der Rückenlehne angeordnete Wendeachse (65) vorgesehen ist um die die Rückenlehne (35) um 180° zu wenden ist.

7. Reisefahrzeug nach einem oder mehreren der vorhergehenden Ansprüche, dadurch gekennzeichnet, daß am unteren Ende des Liegeteiles (45) eine quer zur Fahrzeuglängsrichtung angeordnete Schwenkachse (47) vorgesehen ist, um die das Liegeteil (45) schwenkbeweglich gelagert ist.

8. Reisefahrzeug nach einem oder mehreren der vorhergehenden Ansprüche, dadurch gekennzeichnet, daß an der Innenseite des Abteils eine Armlehne (52) vorgesehen ist, die um eine vordere Achse zum Abstützen der sich in der horizontalen Position befindlichen Rückenlehne (35) hochschwenkbar ist.

9. Reisefahrzeug nach einem oder mehreren der vorhergehenden Ansprüche, dadurch gekennzeichnet, daß an der Fensterseite eine an der Außenwand gelagerte Strebe (70) vorgesehen ist, die zum Unterstützen der in die horizontale Position hochgeschwenkten Rückenlehne (35) um eine vordere Achse hochschwenkbar ist.

10. Reisefahrzeug nach einem oder mehreren der vorhergehenden Ansprüche, dadurch gekennzeichnet, daß am Dach (21) des Fahrzeuges Sicherheitsgurte (80, 81) vorgesehen sind, die an der hochgeschwenkten Rückenlehne (35) zu befestigen sind.

11. Reisefahrzeug nach einem oder mehreren der vorhergehenden Ansprüche, dadurch gekennzeichnet, daß die Sitzpolster (36, 37) und die Rückenlehnen (38, 39) den Körperkonturen der Fahrgäste entsprechend gemuldet sind.

12. Reisefahrzeug nach einem oder mehreren der vorhergehenden Ansprüche, dadurch gekennzeichnet, daß die Liegeauflagen der Sitzbank (34), der Rückenlehne (35) und des Liegeteiles (45) als Matratze ausgebildet sind.

13. Reisefahrzeug nach einem oder mehreren der vorhergehenden Ansprüche, dadurch gekennzeichnet, daß die Liegeauflagen aus einem elastisch nachgiebigen Schaumstoff bestehen.

**Revendications**

1. Véhicule de tourisme, notamment autocar de grand tourisme, avec un couloir central traversant le compartiment des passagers et avec des sièges doubles prévus de part et d'autre du couloir central et pouvant être amenés d'une position assise à une position de repos et respectivement de couchette et inversement, caractérisé en ce

a) que le compartiment des passagers est divisé des deux côtés du couloir central (26) par des parois transversales (27, 28, 29) en plusieurs compartiments (4 à 15) comprenant chacun deux sièges doubles (33, 53) disposés face à face;

b) que, en position assise, la banquette (34) comporte sur le dessus deux rembourrages de siège (36, 37) juxtaposés et en dessous un support de couchette élastique (40) et qu'elle peut être rabattue vers l'avant d'environ 180° autour d'un axe de pivotement (41) prévu à l'extrémité antérieure de la banquette (34) et s'étendant transversalement à la direction longitudinale du véhicule;

c) que, en position assise, le dossier (35) comporte à l'avant deux rembourrages de dossier (38, 39) juxtaposés et à l'arrière un support de couchette (42) élastique flexible, qu'il peut être relevé dans une position horizontale en pivotant autour d'un axe (64) prévu à l'extrémité supérieure du dossier (35) et s'étendant transversalement à la direction longitudinale du véhicule, et que dans cette position il peut être tourné de 180° autour d'un axe (65) orienté dans le sens longitudinal du véhicule et fixé dans cette position, et

d) que, entre le siège (33) et la paroi transversale (27) est prévu un élément de couchette souple (45) lequel peut être amené en alignement avec le support de couchette (40) de la banquette (34).

2. Véhicule de tourisme selon la revendication 1, caractérisé en ce que l'axe de pivotement (41) de la banquette (34) s'étend en continu entre le rembourrage de siège (36, 37) et le support de couchette (40), du couloir central (26) jusqu'à la paroi latérale (69) du véhicule.

3. Véhicule de tourisme selon l'une des revendications 1 ou 2, caractérisé en ce qu'au milieu du compartiment, entre les sièges doubles (33, 53) opposés, est prévue une console (30) pour soutenir la banquette (34) rabattue.

4. Véhicule de tourisme selon l'une ou plusieurs des revendications précédentes, caractérisé en ce que, lorsque les sièges (34) se trouvent en position assise, une table (31) est disposée sur la console (30).

5. Véhicule de tourisme selon l'une ou plusieurs des revendications précédentes, caractérisé en ce que le dossier (35) incliné est monté à son extrémité supérieure de façon à pouvoir pivoter autour d'un axe de pivotement (64) disposé transversalement à la direction longitudinale du véhicule.

6. Véhicule de tourisme selon l'une ou plusieurs des revendications précédentes, caractérisé en ce que perpendiculairement à l'axe de pivotement (64) est prévu un axe de renversement (65) disposé dans le sens longitudinal du dossier et permettant de retourner le dossier (35) de 180°.

7. Véhicule de tourisme selon l'une ou plusieurs des revendications précédentes, caractérisé en ce qu'à l'extrémité inférieure de l'élément de couchette (45) est prévu un axe de pivotement (47) disposé transversalement à la direction longitudinale du véhicule, autour duquel peut pivoter ledit élément de couchette (45).

8. Véhicule de tourisme selon l'une ou plusieurs des revendications précédentes, caractérisé en ce que sur la face intérieure du compartiment est prévu un accoudoir (52) qui peut être relevé autour d'un axe antérieur pour soutenir le dossier (35) placé dans la position horizontale.

9. Véhicule de tourisme selon l'une ou plusieurs des revendications précédentes, caractérisé en ce que du côté vitre est prévue une contre-fiche (70) montée sur la paroi extérieure et pouvant être relevée autour d'un axe antérieur pour soutenir le dossier (35) relevé dans la position horizontale.

10. Véhicule de tourisme selon l'une ou plusieurs des revendications précédentes, caractérisé en ce qu'au toit (21) du véhicule sont prévues des sangles de sécurité (80, 81) qui peuvent être fixées sur le dossier (35) relevé.

11. Véhicule de tourisme selon l'une ou plusieurs des revendications précédentes, caractérisé en ce que les rembourrages de siège (36, 37) et les dossiers (38, 39) sont conformés en baquets de façon à s'adapter à l'anatomie des passagers.

12. Véhicule de tourisme selon l'une ou plusieurs des revendications précédentes, caractérisé en ce que les supports de couchette de la banquette (34), du dossier (35) et de l'élément de couchette (45) sont conformés en matelas.

13. Véhicule de tourisme selon l'une ou plusieurs des revendications précédentes, caractérisé en ce que les supports de couchette sont constitués d'un produit alvéolaire élastique.

## Claims

1. Travel vehicle, in particular travel bus, having a central gangway through the passenger compartment and having double seats, provided on either side of the central gangway, which can be converted from a sitting position to a resting or lying position and vice versa, characterized in that

a) the passenger compartment is divided on either side of the central gangway (26) by transverse walls (27, 28, 29) into a plurality of compartments (4 to 15) each having two mutually opposing double seats (33, 53),

b) the bench (34) has in the sitting position two mutually adjacent sitting cushions (36, 37) at the top and a resilient lying support (40) at the bottom, and is to be tilted forward through approximately 180° around a pivot axis (41) provided at the front end of the bench (34) and extending transversely to the longitudinal direction of the vehicle,

c) the back rest (35) has in the sitting position two mutually adjacent back cushions (38, 39) at the front and a resilient lying support (42) at the rear, and can be pivoted up into a horizontal position about an axis (64) provided at the upper end of the back rest (35) and extending transversely to the longitudinal direction of the vehicle, and can be turned in this position through 180° about an axis (65) extending in the longitudinal direction of the vehicle, and can be fixed in this position, and

d) provided between the seat (33) and the transverse wall (27) is a resilient lying part (45) which is to be brought into a position flush with the lying support (40) of the bench (34).

2. Travel vehicle according to Claim 1, characterized in that the pivot axis (41) of the bench (34) is arranged between the sitting cushion (36, 37) and the lying support (40) continuously from the central gangway (26) as far as the side wall (69) of the vehicle.

3. Travel vehicle according to Claim 1 or 2, characterized in that a bracket (30) is provided for supporting the swung round bench (34) in the centre of the compartment between the opposing double seats (33, 53).

4. Travel vehicle according to one or more of the preceding claims, characterized in that a table (31) is arranged on the bracket (30) in the sitting position of the seats (34).

5. Travel vehicle according to one or more of the preceding claims, characterized in that the oblique back rest (35) is mounted such that it is pivotal at its upper end on a pivot axis (64) arranged transversely to the longitudinal direction of the vehicle.

6. Travel vehicle according to one or more of the preceding claims, characterized in that provided perpendicular to the pivot axis (64) is a turning axis (65) arranged in the longitudinal direction of the back rest, about which turning axis the back rest (35) is to be turned through 180°.

7. Travel vehicle according to one or more of the preceding claims, characterized in that provided at the lower end of the lying part (45) is a pivot axis (47) arranged transversely to the longitudinal direction of the vehicle, about which pivot axis the lying part (45) is mounted pivotally movably.

8. Travel vehicle according to one or more of the preceding claims, characterized in that provided on the inside of the compartment is an arm rest (52) which can be pivoted up about a front axis for supporting the back rest in the horizontal position.

9. Travel vehicle according to one or more of the preceding claims, characterized in that provided on the window side is a strut (70) which is mounted on the outer wall and which can be pivoted up about a front axis for supporting the back rest (35) pivoted up into the horizontal position.

10 Travel vehicle according to one or more of the preceding claims, characterized in that provided on the roof (21) of the vehicle are safety belts (80, 81) which are to be secured to the pivoted up back rest (35).

11. Travel vehicle according to one or more of the preceding claims, characterized in that the sitting cushions (36, 37) and the back rests (38, 39) are hollowed to correspond to the physical contours of the passengers.

12. Travel vehicle according to one or more of the preceding claims, characterized in that the lying supports of the bench (34), the back rest (35) and the lying part (45) are constructed as mattresses.

13. Travel vehicle according to one or more of the preceding claims, characterized in that the lying supports comprise a resilient foamed material.

FIG.1

# FIG. 2

EP 0 248 373 B1

# FIG.3

FIG.4

FIG. 5

FIG.6

FIG.7

FIG.8

FIG. 9

FIG. 10

42

35

38

78

39

## FIG. 11

40

80

42

## FIG. 12

52

39

27

70

79

40

41

47